# DEMANDE DE BREVET EUROPEEN

(11) **EP 0 895 382 A2**
(43) Date de publication de la demande: **03.02.1999**
(21) Numéro de dépôt: 98500159.3
(22) Date de dépôt: 07.07.1998
(51) Int. Cl.: H04L 25/02

(54) **Méthode pour l'amélioration des caractéristiques de comptabilité électromagnétique sur des systèmes de communication différentielle**

(30) Priorité: 30.07.1997 ES 9701681
(71) Demandeur: MECANISMOS AUXILIARES INDUSTRIALES S.A. M.A.I.S.A., E-43800 Valls, Tarragona (ES)
(72) Inventeur: Silva Martinez, Fernando, 43800 Valls (Tarragona) (ES)
(74) Mandataire: Morgades Manonelles, Juan Antonio

(57) **Abrégé**

Dans l'une des réalisations préférées de ce qui fait l'objet de la présente sollicitude, comme on peut le voir sur la figure nº 1, s'agissant d'une réalisation conventionnelle, les circuits émetteur et récepteur (10-11) sont reliés par un premier conducteur (12) et un second conducteur pour le signal complémentaire (13). La solution proposée, comme le montre la même figure, consiste par exemple en un cas pratique concernant le secteur de l'automobile. Il s'agit de disposer d'un troisième conducteur (14) entre deux points d'un système d'alimentation (16).

## Description

La présente sollicitude de patente d'invention consiste, conformément aux indications de l'énoncé, en une "MÉTHODE POUR L'AMÉLIORATION DES CARACTÉRISTIQUES DE COMPATIBILITÉ ÉLECTROMAGNÉTIQUE SUR DES SYSTÈMES DE COMMUNICATION DIFFÉRENTIELLE", dont les nouvelles caractéristiques de construction, conformation et conception remplissent la mission pour laquelle il a été spécifiquement projeté, avec un maximum de sécurité et d'efficacité.

C'est en 1820 déjà que Messieurs Oersted et Ampère ont découvert les effets magnétiques du courant électrique, révélant alors l'intime relation existante entre les deux ensembles de phénomènes.

Il est notoire qu'une charge électrique au repos créé dans son environnement un champ électrique "E" cependant que si la charge électrique est mobile, outre le champ électrique, elle créé un champ magnétique "B" En principe, il est établi que la compatibilité électromagnétique affecte les systèmes électroniques de transmission. Les problèmes peuvent apparaître aussi bien en raison d'émissions électromagnétiques crées par ces systèmes et qui affectent de tiers appareils que pour la susceptibilité du système de communication et pour les perturbations créées par ces tiers appareils.

Dans le premier, c'est-à-dire dans celui des émissions électromagnétiques, le système de communication qui les provoquent entraîne un mauvais fonctionnement des appareils externes, cependant que dans le second cas, c'est le propre système de communication qui fonctionne de façon incorrecte.

Quoi qu'il en soit, soit pour des exigences des normes en vigueur, soit pour les nécessités fonctionnelles des appareils et des systèmes électriques et électroniques impliqués, il est nécessaire d'appliquer certaines techniques spéciales de conception électronique afin de pouvoir réduire les émissions produites, augmenter l'immunité et éliminer les problèmes de compatibilité électromagnétique.

Parmi d'autres secteurs où ce type de problèmes se présente il convient de mentionner celui de l'automobile où l'utilisation de systèmes de communication fait que ceux-ci se produisent, avec les effets susmentionnés. Jusqu'à présent, les solutions techniques connues pour résoudre les problèmes de compatibilité électromagnétique sur des systèmes électroniques de transmission se basent sur l'utilisation d'une ou plusieurs des techniques suivantes :
- Systèmes différentiels de communication.
- Câbles écranés.
- Amélioration de la qualité des circuits électroniques émetteurs et récepteurs.

Dans tous les cas susmentionnés, il est possible d'améliorer les prestations du système électronique de communication à différents niveaux et à des coûts divers. En aucun cas les émissions irradiées ne sont totalement éliminées, et il n'est pas non plus possible d'obtenir un système entièrement immunisé contre les perturbations externes.

Le système différentiel utilisé jusqu'à présent se base sur l'utilisation de la redondance électrique dans la communication en transmettant doublement le signal par deux différents conducteurs. L'émetteur produit deux signaux électriques complémentaires qui codifient l'information à envoyer. Deux sorties du circuit électronique émetteur sont connectées à deux conducteurs conduisant les signaux électriques jusqu'au récepteur. Le circuit récepteur dispose quant à lui de deux entrées pour les deux signaux supplémentaires en provenance du circuit émetteur. Les deux signaux reçus se combinent (soustraction) de façon appropriée sur le récepteur pour récupérer l'information d'origine.

Pour résoudre la problématique exposée jusqu'ici, et en ce qui concerne l'objet de la présente invention, l'expérience a permis d'établir que l'utilisation sur des systèmes différentiels de transmission d'un troisième élément conducteur connecté au système d'alimentation électrique de l'automobile entraîne une réduction des émissions électromagnétiques irradiées et produites par le système de communication, en augmentant l'immunité contre les perturbations externes du système différentiel de transmission.

D'autres détails et caractéristiques seront soulignés au cours de la description qui est donnée ci-dessous et qui fait référence aux figures accompagnant ce mémoire dans lequel, de façon quelque peu schématique, sont représentés les détails préférés. Ces détails sont donnés à titre d'exemple et se réfèrent à un cas possible de réalisation pratique, mais ne demeurent pas limités aux détails et composants qui y sont exposés ; cette description doit donc être considérée d'un point de vue illustratif et sans aucune sorte de limitations.

On trouvera ci-dessous une liste détaillée des divers éléments cités dans la présente invention : (10) circuit émetteur différentiel, (11) circuit récepteur différentiel, (12) premier conducteur du système différentiel, (13) second conducteur du système différentiel (signal complémentaire), (14) troisième conducteur, (15) connexion du troisième conducteur à un système d'alimentation électrique, (16) système d'alimentation électrique de l'automobile.

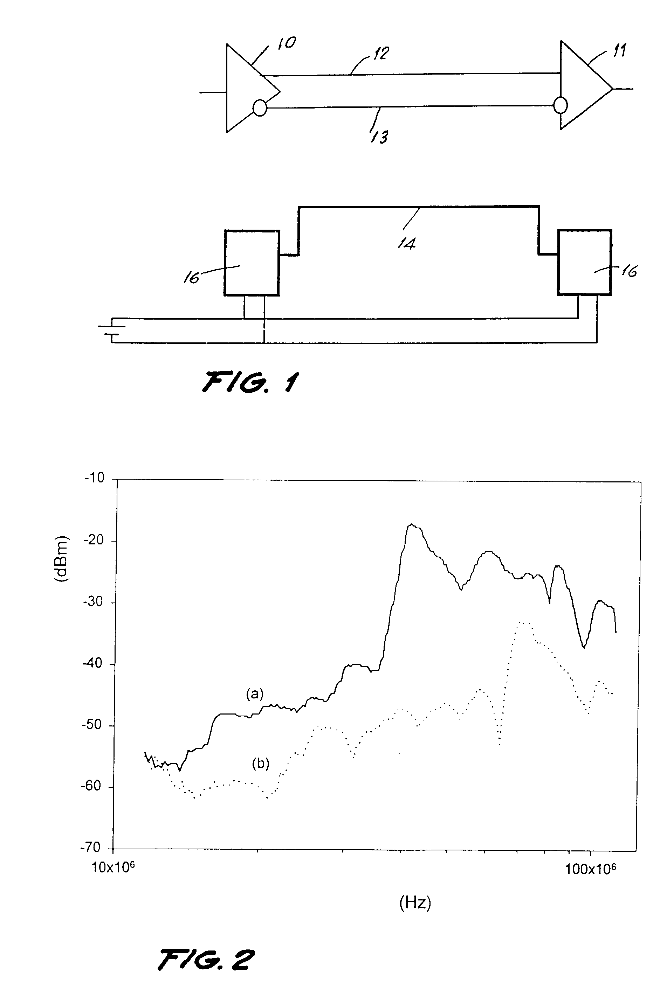

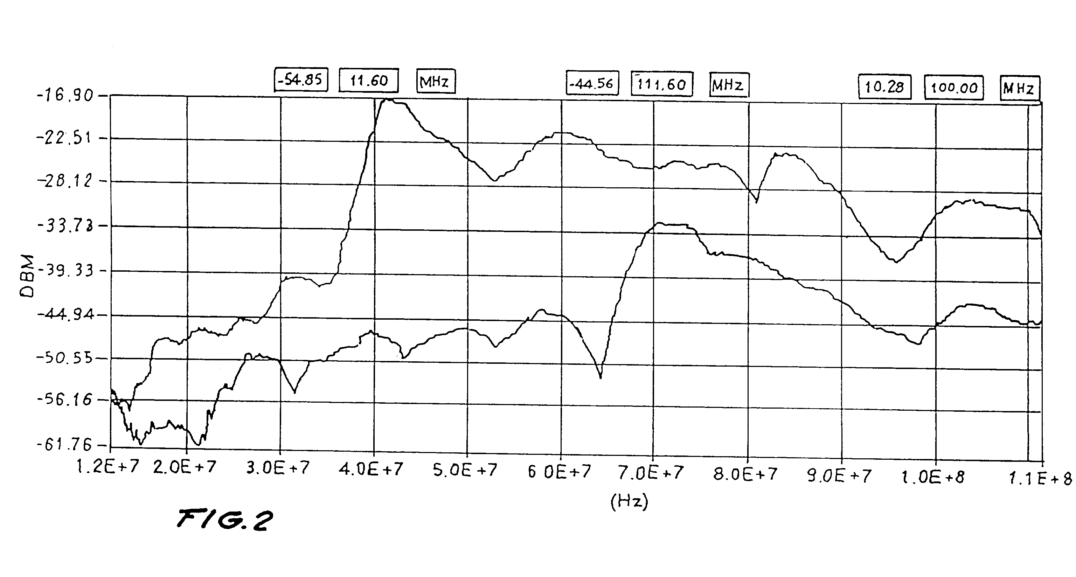

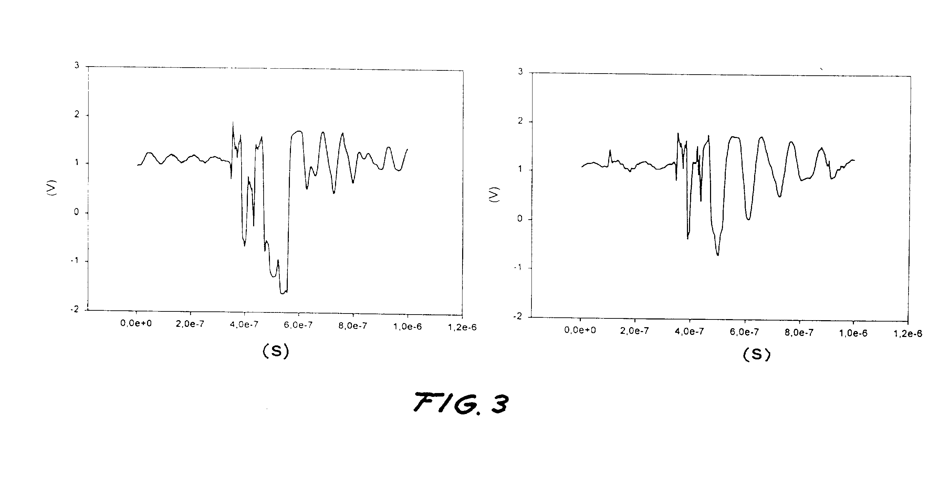

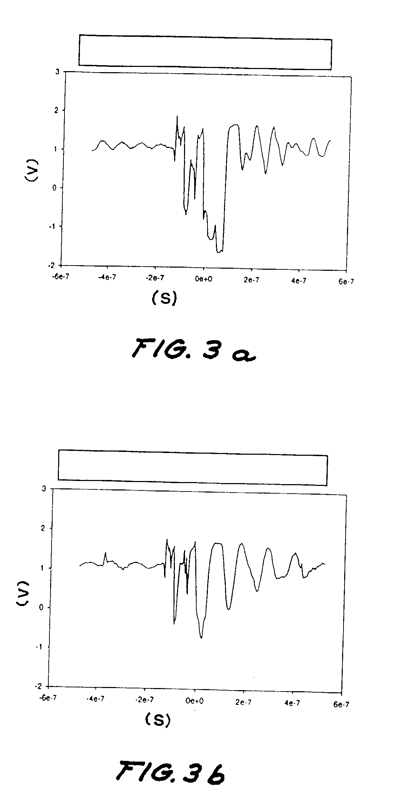

La figure nº 1 est un schéma d'application de la méthode préconisée sur la présente patente à un système d'alimentation électrique de l'automobile.

La figure nº 2 est un graphique représentant un exemple de réduction des émissions irradiées par le biais de l'utilisation d'un troisième conducteur.

La figure nº 3 est constituée de graphiques sur lesquels on constate l'amélioration de l'immunité électromagnétique que représente l'utilisation d'un troisième conducteur.

Dans l'une des réalisations préférées de ce qui fait l'objet de la présente sollicitude, comme on peut le voir sur la figure nº 1, s'agissant d'une réalisation conventionnelle, les circuits émetteur et récepteur (10-11) sont reliés par un premier conducteur (12) et un second conducteur pour le signal complémentaire (13). La solution proposée, comme le montre la même figure, consiste par exemple en un cas pratique concernant le secteur de l'automobile. Il s'agit de disposer d'un troisième conducteur (14) entre deux points d'un système d'alimentation (16).

Cette disposition, celle du troisième conducteur (14), comme on peut le voir sur le graphique de la figure nº 2 ligne (b), entraîne une diminution de la perturbation par rapport à la puissance du signal nettement appréciable, la ligne continue (a) appartient aux valeurs atteintes dans les systèmes conventionnels, alors que la ligne continue (b) appartient à des systèmes où un troisième conducteur (14) a été prévu, comme cela est représenté sur la figure nº 1.

La figure nº 3 indique les valeurs atteintes avec la nouvelle disposition, concernant la puissance-temps : le graphique (a) sans utiliser le troisième conducteur (14) et le graphique (b) en utilisant le troisième conducteur (14). Les différences entre les deux systèmes sont donc significatives et démontrent que le nouveau système est idéal, permettant de rendre son application propice sur tout système différentiel de transmission, bien que l'exemple de la figure nº1 ne soit pas applicable au secteur de l'automobile.

La présente sollicitude de patente d'invention ayant été suffisamment décrite en correspondance avec les plans ci-joints, il est entendu que toutes modifications de détail jugées opportunes pourront être introduites sur ceux-ci, à la condition de ne pas altérer l'essence de la patente qui se trouve résumée dans les revendications suivantes.

## Revendications

1. "MÉTHODE POUR L'AMÉLIORATION DES CARACTÉRISTIQUES DE COMPATIBILITÉ ÉLECTROMAGNÉTIQUE SUR DES SYSTÈMES DE COMMUNICATION DIFFÉRENTIELLE" d'application spéciale sur des systèmes électroniques de transmission en conséquence des émissions électromagnétiques créées par ces systèmes et qui affectent aussi bien d'autres appareils que la susceptibilité du système de communication aux perturbations créées par ces tiers appareils, caractérisée par la pose d'un troisième conducteur entre un émetteur et un récepteur de signal.
